# EUROPÄISCHE PATENTSCHRIFT

(11) **EP 2 528 364 B1**
(45) Veröffentlichungstag und Bekanntmachung des Hinweises auf die Patenterteilung: **04.07.2018**
(21) Anmeldenummer: 12168004.5
(22) Anmeldetag: 15.05.2012
(51) Int. Cl.: H04W 8/26, H04W 12/08, H04W 12/04

(54) **Verfahren und Vorrichtung zum Bereitstellen einer Identifikationskennung eines elektronischen Endgeräts**
Method and device for providing an identification signal of an electronic end device
Procédé et dispositif de préparation d'un critère d'identification d'un terminal électronique

(30) Priorität: 24.05.2011 DE 102011102489
(43) Veröffentlichungstag der Anmeldung: 28.11.2012
(73) Patentinhaber: Vodafone GmbH, 40549 Düsseldorf (DE)
(72) Erfinder: Hengels, Erik, 41352 Korschenbroich (DE); Römer, Arno, 40229 Düsseldorf (DE)
(74) Vertreter: Müller, Thomas

(56) Entgegenhaltungen:
- WO-A1-2008/047195
- WO-A2-99/27678
- DE-A1- 10 213 073

## Beschreibung

Die vorliegende Erfindung betrifft zunächst ein Verfahren zum Bereitstellen einer Identifikationskennung eines elektronischen Endgeräts, das einem ersten Kommunikationsnetz, insbesondere einem Mobilfunknetz zugeordnet ist, für eine Partei, die einem zweiten Kommunikationsnetz, insbesondere dem Internet, zugeordnet ist, gemäß den Oberbegriffen von Patentanspruch 1 und 10. Weiterhin betrifft die Erfindung auch eine Vorrichtung zum Bereitstellen einer Identifikationskennung eines elektronischen Endgeräts, das einem ersten Kommunikationsnetz, insbesondere einem Mobilfunknetz zugeordnet ist, für eine Partei, die einem zweiten Kommunikationsnetz, insbesondere dem Internet, zugeordnet ist, gemäß dem Oberbegriff von Patentanspruch 14.

Viele neuartige elektronische Endgeräte, wie beispielsweise Smartphones, Netbooks und dergleichen können Datenverbindungen sowohl über das Mobilfunknetz als auch über Festnetz / WLAN, Netbooks sogar über RJ-45 Stecker, aufbauen. Beim Zugang über Festnetz geht die MSISDN als zentrale Identifizierung im Mobilfunknetz verloren und damit auch alle weiteren Anwendungsfälle wie beispielsweise die mobilen Bezahlverfahren. Der Endkunde erlebt hierdurch einen Medienbruch beim Wechsel der Zugangsvarianten. Gegebenenfalls muss er sich neu in Portale einloggen, weil er durch den anderen Zugang nicht mehr erkannt wird. Oder aber mobile, auf die MSISDN abgestimmte Services, funktionieren gar nicht mehr oder nur sehr umständlich. Die Internationale Patentanmeldung WO2008/047195 wird als Stand der Technik angeführt. Der vorliegenden Erfindung liegt deshalb die Aufgabe zugrunde, Verfahren sowie eine Vorrichtung der eingangs genannten Art derart weiterzubilden, das damit ein vorstehend genannter Medienbruch vermieden werden kann.

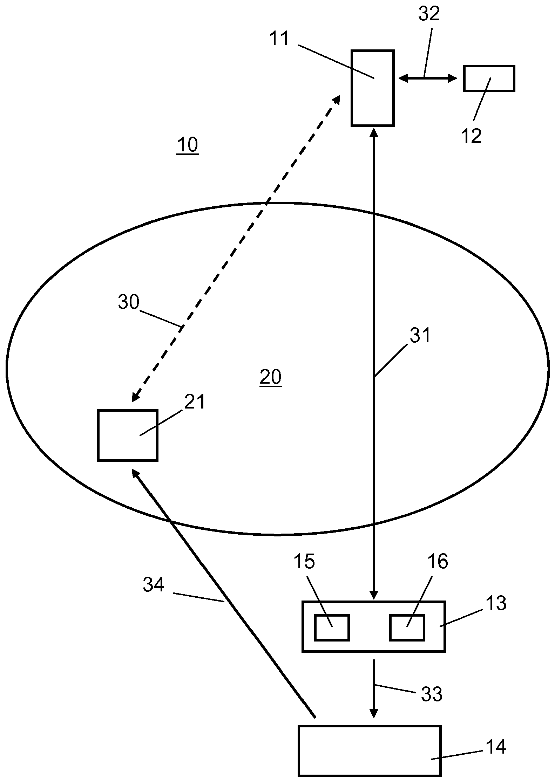

Diese Aufgabe wird erfindungsgemäß gelöst durch das Verfahren mit den Merkmalen gemäß des unabhängigen Patentanspruchs 1, das Verfahren mit den Merkmalen gemäß des unabhängigen Patentanspruchs 10 sowie die Vorrichtung mit den Merkmalen gemäß des unabhängigen Patentanspruchs 14. Weitere Merkmale und Details der Erfindung ergeben sich aus den Unteransprüchen, der Beschreibung sowie der Zeichnung. Dabei gelten Merkmale und Details, die im Zusammenhang mit dem ersten Verfahrensaspekt beschrieben sind selbstverständlich auch im Zusammenhang mit dem zweiten Verfahrensaspekt und umgekehrt. Merkmale und Details, die im Zusammenhang mit den erfindungsgemäßen Verfahren beschrieben sind, gelten selbstverständlich auch im Zusammenhang mit der erfindungsgemäßen Vorrichtung, und umgekehrt, so dass hinsichtlich der Offenbarung zwischen den einzelnen Erfindungsaspekten wechselseitig vollinhaltlich aufeinander Bezug genommen und verwiesen wird.

Im Stand der Technik ist es bei Mobiltelefonen bereits bekannt, dass im Fall, dass zwischen dem Mobiltelefon und einer Partei über ein Mobilfunknetz eine Kommunikation aufgebaut wird, die MSISDN (Mobile Subscriber Integrated Services Digital Network Number) vom Betreiber des Mobilfunknetzes in den Header angereichert wird, so dass die Partei das Mobiltelefon anhand der MSISDN identifizieren kann.

Kommuniziert das elektronische Endgerät, beispielsweise das Mobiletelefon oder Smartphone, mit der Partei jedoch nicht über das Mobilfunknetz, sondern beispielsweise über das Internet, kann die MSISDN vom Mobilfunknetzbetreiber nicht mehr im Header angereichert werden. Wenn eine solche Anreicherung fehlt, ist es erforderlich, die erforderliche Identifikationskennung des elektronischen Endgeräts der Partei auf andere Weise verfügbar zu machen. An diesem Punkt setzt die vorliegende Erfindung an

Gemäß dem ersten Aspekt der Erfindung wird ein Verfahren zum Bereitstellen einer Identifikationskennung eines elektronischen Endgeräts, das einem ersten Kommunikationsnetz, insbesondere einem Mobilfunknetz zugeordnet ist, für eine Partei, die einem zweiten Kommunikationsnetz, insbesondere dem Internet, zugeordnet ist, bereitgestellt, das durch folgende Schritte gekennzeichnet ist:
a) über eine Schnittstelle empfängt das elektronische Gerät von der Partei einen Request zur Bereitstellung einer Identifikationskennung, der zumindest eine Requestkennung aufweist;
b) über eine Kommunikationsverbindung zwischen dem elektronischen Endgerät und eine dem ersten Kommunikationsnetz zugeordnete Servereinrichtung wird ein Schlüssel zum Verschlüsseln einer dem elektronischen Endgerät zugeordneten Identifikationskennung von der Servereinrichtung an das elektronische Endgerät übertragen, oder im elektronischen Endgerät ist ein Schlüssel zum Verschlüsseln einer dem elektronischen Endgerät zugeordneten Identifikationskennung vorgesehen;
c) mittels des Schlüssels wird zumindest die Identifikationskennung im elektronischen Endgerät verschlüsselt;
d) die zumindest verschlüsselte Identifikationskennung wird mit der im elektronischen Endgerät empfangenen Requestkennung verknüpft, vom elektronischen Endgerät zur Servereinrichtung übertragen und in der Servereinrichtung entschlüsselt;
e) die entschlüsselte Identifikationskennung mit der verknüpften Requestkennung wird über eine Schnittstelle zur Übertragung an die Partei bereitgestellt.

Gemäß dem erfindungsgemäßen Verfahren wird eine Identifikationskennung eines elektronischen Endgeräts bereitgestellt. Dabei ist die Erfindung nicht auf bestimmte Typen elektronischer Endgeräte beschränkt. Insbesondere kann es sich bei einem solchen Gerät um ein solches handeln, mittels dessen über verschiedene Kommunikationsnetze kommuniziert werden kann. Beispielsweise kann vorgesehen sein, dass das elektronische Endgerät in der Lage ist, sowohl über ein erstes Kommunikationsnetz, etwa in Form eines Mobilfunknetzes als auch über ein zweites Kommunikationsnetz, beispielsweise das Internet zu kommunizieren. Beispielsweise kann es sich bei einem solchen elektronischen Endgerät um ein Mobiltelefon, ein Smartphone, ein Notebook, ein Netbook und dergleichen handeln. Für dieses elektronische Endgerät soll eine Identifikationskennung bereitgestellt werden.

Dabei ist die Erfindung nicht auf bestimmte Typen von Identifikationskennungen beschränkt. Grundsätzlich kann eine Identifikationskennung jegliche Art von Kennung umfassen, die von anderen Stellen gematcht werden kann. Die Identifikationskennung muss so geartet sein, dass sie eine eindeutige Identifizierung des elektronischen Endgeräts ermöglicht. Insbesondere sollen die Identifikationskennungen so gestaltet sein, dass sie verschlüsselt und entschlüsselt werden können. Insbesondere sollen die Identifikationskennungen auch so gestaltet sein, dass sie von der Servereinrichtung und/oder der Partei im zweiten Kommunikationsnetz erkannt und gekannt werden können. Im Zusammenhang mit einem Mobilfunknetz kann es sich bei einer solchen Identifikationskennung bevorzugt um eine IMSI (International Mobile Subscriber Identity) und/oder um eine MSISDN (Mobile Subscriber Integrated Services Digital Network Number) handeln. Eine IMSI besteht insbesondere aus 15 Ziffern und stellt die Identifikationsnummer eines Mobiltelefons dar. Eine MSISDN ist insbesondere eine einmalig vorhandene, einem bestimmten Nutzer zugeordnete Rufnummer, die ein Anrufer wählt, um einen Mobilfunkteilnehmer zu erreichen.

Das elektronische Endgerät ist einem ersten Kommunikationsnetz zugeordnet. Das bedeutet insbesondere, dass das elektronische Endgerät in diesem Kommunikationsnetz registriert und betrieben wird. Beispielsweise kann das erste Kommunikationsnetz als Mobilfunknetz ausgebildet sein. Moderne elektronische Endgeräte, die dem ersten Kommunikationsnetz zugeordnet sind, können bevorzugt so ausgestaltet sein, dass sie auch über ein zweites Kommunikationsnetz, beispielsweise das Internet, kommunizieren können.

Eine Identifikationskennung eines solchen elektronischen Endgeräts soll für eine Partei, die einem zweiten Kommunikationsnetz zugeordnet ist, bereitgestellt werden. Bei dem zweiten Kommunikationsnetz handelt es sich beispielsweise um das Internet.

Eine dem zweiten Kommunikationsnetz zugeordnete Partei ist insbesondere eine Instanz oder Einrichtung, beispielsweise ein Rechner, eine Servereinrichtung, ein Betreiber einer Webseite oder dergleichen. Beispielsweise kann es sich bei einer solchen Partei um einen Rechner, eine Servereinrichtung, einen Betreiber einer Webseite oder dergleichen handeln, die insbesondere einem Anbieter, beispielsweise einem Diensteanbieter, zugeordnet ist. Beispielsweise kann es sich bei der Partei um einen Anbieter im Internet handeln, der eine Webseite betriebt, wobei die Webseite auf einer Servereinrichtung, einem Rechner oder dergleichen abgelegt ist und über diesen kontaktiert werden kann.

Die Bereitstellung der Identifikationskennung erfolgt erfindungsgemäß auf folgende Weise:
A) Über eine Schnittstelle empfängt das elektronische Gerät von der Partei einen Request zur Bereitstellung einer Identifikationskennung, der zumindest eine Requestkennung aufweist. Will das elektronische Endgerät eine Kommunikation zu der Partei über das zweite Kommunikationsnetz, beispielsweise das Internet, aufbauen, und stellt die Partei fest, dass im Rahmen der Kommunikation die Identifikationskennung des dem ersten Kommunikationsnetz zugeordneten elektronischen Endgeräts, beispielsweise die MSISDN fehlt. Fordert die Partei das elektronische Endgerät auf, diese Identifikationskennung zu liefern. Das elektronische Endgerät wird von Seiten der Partei getriggert, diese Identifikationskennung zu liefern und sich darüber zu identifizieren. Insbesondere wird für die Kommunikation, bei der es sich im Falle eines Diensteanbieters oder Produktanbieters als Partei insbesondere um eine Bestellung oder dergleichen handeln kann, ein Request erzeugt, bei dem es sich allgemein um eine Anfrage handeln kann. Um diesen Request identifizieren zu können, wird der Request mit einer bestimmten Requestkennung versehen. Bei der Requestkennung kann es sich im Falle einer Internetverbindung beispielsweise um eine Session-ID handeln. Bevorzugt schickt die Partei somit eine Anfrage an das elektronische Endgerät, die Identifikationskennung des elektronischen Endgeräts zu liefern, wobei dieser Anfrage eine Anfragekennung, beispielsweise eine Session-ID, zugeordnet ist.
B) Über eine Kommunikationsverbindung zwischen dem elektronischen Endgerät und eine dem ersten Kommunikationsnetz zugeordnete Servereinrichtung wird ein Schlüssel zum Verschlüsseln einer dem elektronischen Endgerät zugeordneten Identifikationskennung von der Servereinrichtung an das elektronische Endgerät übertragen. Ein solcher Schlüssel ist beispielsweise Bestandteil eines Verschlüsselungs/Entschlüsselungsverfahrens und wird von diesem generiert. Das elektronische Endgerät, beispielsweise eine auf dem elektronischen Endgerät ablaufende Applikation holt sich den Schlüssel beispielsweise von der Servereinrichtung ab. Die Servereinrichtung erstellt den Schlüssel und überträgt diesen an das elektronische Endgerät. Der Schlüssel kann insbesondere temporär gültig sein und/oder zufällig erstellt werden. Bei der Servereinrichtung kann es sich beispielsweise um einen PROXY, beispielsweise eine Art Vermittler in einem Computernetzwerk, handeln.
   Gemäß einer alternativen Ausführungsform kann vorgesehen sein, dass im elektronischen Endgerät bereits ein Schlüssel zum Verschlüsseln einer dem elektronischen Endgerät zugeordneten Identifikationskennung vorgesehen ist. In diesem Fall kann der vorstehend beschriebene Kommunikationsschritt entfallen.
   Die beiden vorgenannten Verfahrensschritte A) und B) können in beliebiger Reihenfolge ablaufen. Beispielsweise kann die Übertragung des Schlüssels eingeleitet werden, nachdem das elektronische Endgerät den Request der Partei erhalten hat. Natürlich kann auch vorgesehen sein, dass das elektronische Endgerät, bevor es eine Kommunikation zu der dem zweiten Kommunikationsnetz zugeordneten Partei aufbaut, zunächst die Übertragung des Schlüssel von der Servereinrichtung einleiten, so dass der Schlüssel bei Übertragung des Requests bereits im elektronischen Endgerät vorhanden ist.
C) Im nächsten Schritt wird mittels des Schlüssels zumindest die Identifikationskennung im elektronischen Endgerät verschlüsselt. Natürlich kann auch vorgesehen sein, dass zusätzlich auch Teile des Requests, beispielsweise die Requestkennung mit verschlüsselt wird/werden.
D) Die zumindest verschlüsselte Identifikationskennung wird mit der im elektronischen Endgerät empfangenen Requestkennung verknüpft, wobei diese Requestkennung beispielsweise ebenfalls verschlüsselt sein kann. Die verschlüsselten Daten werden vom elektronischen Endgerät zur Servereinrichtung übertragen und in der Servereinrichtung entschlüsselt und gegebenenfalls vorab entpackt. Optional kann in der Servereinrichtung auch der Request beziehungsweise die Requestkennung überprüft werden, beispielsweise ob diese noch gültig sind. Beispielsweise kann geprüft werden, ob bestimmte vorgegebene Zeitfenster noch nicht abgelaufen sind
E) Anschließend werden die entschlüsselte Identifikationskennung mit der verknüpften Requestkennung wird über eine Schnittstelle zur Übertragung an die Partei bereitgestellt. Dies kann auf unterschiedliche Weise erfolgen, so dass die Erfindung nicht auf bestimmte Ausführungsbeispiele beschränkt ist. Einige bevorzugte Ausführungsformen werden im weiteren Verlauf der Beschreibung näher erläutert.

Bevorzugt kann die entschlüsselte Identifikationskennung mit der verknüpften Requestkennung über eine der Servereinrichtung zugeordnete Schnittstelle zur Übertragung an die Partei bereitgestellt werden.

In anderer Ausgestaltung kann vorgesehen sein, dass die entschlüsselte Identifikationskennung mit der verknüpften Requestkennung von der Servereinrichtung an ein Zielsystem übertragen wird, welches dem ersten Kommunikationsnetz zugeordnet ist und dass die entschlüsselte Identifikationskennung mit der verknüpften Requestkennung über eine dem Zielsystem zugeordnete Schnittstelle zur Übertragung an die Partei bereitgestellt wird. Bei dem Zielsystem kann es sich beispielsweise um ein Abrechnungssystem, ein Weiterleitungssystem oder dergleichen handeln.

Die Servereinrichtung und die Zieleinrichtung sind bevorzugt Bestandteile des ersten Kommunikationsnetzes, beispielsweise eines Mobilfunknetzes. Sie können insbesondere im Kernnetz eines solchen Kommunikationsnetzes vorgesehen sein.

Je nach Ausgestaltung kann vorgesehen sein, dass es sich bei der Servereinrichtung und der Zieleinrichtung um unterschiedliche Einrichtungen handelt. Natürlich kann auch vorgesehen sein, dass beide Einrichtungen in einer einzigen Vorrichtung zusammengefasst sind.

Bevorzugt kann das elektronische Endgerät mittels eines Browsers oder einer Applikation, die auf dem elektronischen Endgerät abläuft und/oder in diesem implementiert ist, eine Kommunikationsverbindung zwischen dem elektronischen Endgerät und der Servereinrichtung aufbauen.

Je nach Ausführungsform kann vorgesehen sein, dass die Kommunikationsverbindung zwischen dem elektronischen Endgerät und der Servereinrichtung über das erste Kommunikationsnetz und/oder über das zweite Kommunikationsnetz aufgebaut wird. Beispielsweise kann vorgesehen sein, dass die Kommunikationsverbindung über das Internet läuft. Beispielsweise kann auch vorgesehen sein, dass die Kommunikationsverbindung über ein Mobilfunknetz läuft. Natürlich sind auch Anwendungsfälle denkbar, bei denen beide Kommunikationsnetze zum Einsatz kommen und Teile der Kommunikation über das erste und Teile der Kommunikation über das zweite Kommunikationsnetz ablaufen.

Bevorzugt kann in dem Fall, dass über die Kommunikationsverbindung zwischen dem elektronischen Endgerät und der Servereinrichtung ein Schlüssel zum Verschlüsseln einer dem elektronischen Endgerät zugeordneten Identifikationskennung von der Servereinrichtung an das elektronische Endgerät übertragen wird, das elektronische Endgerät eine Kommunikationsverbindung zur Servereinrichtung aufbauen, wobei das elektronische Endgerät über die Kommunikationsverbindung eine Anfrage zur Übertragung eines Schlüssel an die Servereinrichtung überträgt, wobei in der Servereinrichtung ein Schlüssel erzeugt oder bereitgestellt wird und wobei der Schlüssel von der Servereinrichtung über die Kommunikationsverbindung an das elektronische Endgerät übertragen wird.

Beispielsweise kann vorgesehen sein, dass ein Schlüssel erst dann erzeugt wird, wenn die Anfrage des elektronischen Endgeräts erfolgt. In anderer Ausgestaltung kann vorgesehen sein, dass in der Servereinrichtung bereits Schlüssel vorab generiert und vorgehalten werden, die dann bei Bedarf abgerufen und an das elektronische Endgerät übertragen werden. In weiterer Ausgestaltung kann auch vorgesehen sein, dass das elektronische Endgerät bei der Anfrage den von der Partei übermittelten Request und/oder die Requestkennung gleich mit an die Servereinrichtung überträgt. Bei dem Request kann es sich insbesondere um die Anfrage der Partei an das elektronische Endgerät handeln, eine Identifizierungskennung bereitzustellen.

Bevorzugt kann vorgesehen sein, dass die Verschlüsselung zumindest der Identifikationskennung in einer Chipkartenapplikation im elektronischen Endgerät erfolgt. Dabei kann die Chipkartenapplikation beispielsweise in Form einer Chipkarte im elektronischen Endgerät vorgesehen sein. In anderer Ausgestaltung ist auch denkbar, dass die Chipkartenapplikation in Form einer Softwareapplikation im elektronischen Endgerät implementiert ist. Chipkarten, die oft auch als Smartcard oder Integrated Circuit Card (ICC) bezeichnet werden, weisen insbesondere einen integriertem Schaltkreis auf, der eine Hardware-Logik, eine Speichereinrichtung oder auch einen Mikroprozessor enthalten kann. Bevorzugt kann vorgesehen sein, dass es sich bei der Chipkartenapplikation um eine SIM-Applikation handelt. Bei einer SIM (Subscriber Identity Module) handelt es sich insbesondere um eine Chipkarte, die in ein Mobiltelefon eingesteckt wird und die zur Identifikation des Nutzers im Mobilfunknetz dient. Mit ihr stellen Mobilfunkanbieter Teilnehmern mobile Telefonanschlüsse und Datenanschlüsse zur Verfügung.

Bevorzugt kann als Identifikationskennung eine dem Nutzer des elektronischen Endgeräts zugeordnete IMSI (International Mobile Subscriber Identity) und/oder eine dem Nutzer des elektronischen Endgeräts zugeordnete MSISDN (Mobile Subscriber Integrated Services Digital Network Number) verschlüsselt werden. Die IMSI ist insbesondere auf der Chipkarte, beispielsweise einer SIM, oder in einer ChipkartenApplikation, beispielsweise einer SIM-Applikation abgelegt beziehungsweise angespeichert. In dem Fall, dass als Identifikationskennung eine dem Nutzer des elektronischen Endgeräts zugeordnete IMSI verschlüsselt wird, kann bevorzugt die verschlüsselte IMSI über die Kommunikationsverbindung vom elektronischen Endgerät an die Servereinrichtung übertragen werden, wobei zumindest die IMSI in der Servereinrichtung entschlüsselt wird und wobei mittels der Servereinrichtung der entschlüsselten IMSI eine dem Nutzer des elektronischen Endgeräts zugeordnete MSISDN als Identifikationskennung zugeordnet wird. Bevorzugt ist vorgesehen, dass als Identifikationskennung des Nutzers des elektronischen Endgeräts die MSISDN bereitgestellt wird.

Mit dem Verfahren gemäß dem ersten Erfindungsaspekt kann insbesondere realisiert werden, dass über eine Applikation und/oder einen Browser im elektronischen Endgerät eine Nachricht, etwa in Form einer SMS, an die Servereinrichtung geschickt wird, die neben der verschlüsselten Identifikationskennung auch die Requestkennung und möglicherweise auch Informationen über das Ziel, die Partei im zweiten Kommunikationsnetz, enthält. Diese Information wird dann über die Servereinrichtung, beispielsweise über ein Short Message Service Centre (SMSC) und einer weiteren Instanz zur Überprüfung, beispielsweise die Zieleinrichtung, und Abrechnung die Identität, beispielsweise die MSISDN, des elektronischen Endgeräts, an die Partei weiterleitet.

Das Verfahren bietet insbesondere eine Träger unabhängige SIM Identifikation.

Wesentliche Anwendungsgebiete des erfindungsgemäßen Verfahrens sind beispielsweise Services, die dem Endkunden sowohl beim Internetzugang über Mobilfunk, etwa GSM, UMTS, LTE und dergleichen, als auch über WLAN, LAN, und dergleichen ihre Dienste anbieten, beispielsweise Bezahlverfahren, Identity-Management und dergleichen.

Im Fall eines Mobilfunknetzes als erstem Kommunikationsnetz ist der Fortbestand der MSISDN zur Identifizierung der Endkunden gewährleistet. Dadurch können insbesondere alle bestehenden mobilen Services, unabhängig vom Zugang, weiterhin genutzt werden.

Eine bevorzugte Ausführungsform besteht insbesondere in der Kombination der SIM-Applikation mit der Servereinrichtung, beispielsweise einem Proxy, die sowohl die Gültigkeit der Identität sicherstellt als auch die Daten im Internet vor unbefugter Nutzung schützt und eine Basis für die kommerzielle Nutzung/Abrechnung bietet. Zudem ist das Verfahren auf eine Nutzung durch alle Mobilnetzwerkbetreiber ausgelegt.

Gemäß einem zweiten Aspekt der Erfindung wird ein Verfahren bereitgestellt, das auf dem Verfahren gemäß dem ersten Erfindungsaspekt basiert, bei dem aber die Partei nunmehr Bestandteil des Verfahrens ist. Auf die Ausführungen zum ersten Erfindungsaspekt wird deshalb im Zusammenhang mit dem folgenden zweiten Erfindungsaspekt vollinhaltlich Bezug genommen und verwiesen.

Gemäß dem zweiten Aspekt der Erfindung wird ein Verfahren zum Bereitstellen einer Identifikationskennung eines elektronischen Endgeräts, das einem ersten Kommunikationsnetz, insbesondere einem Mobilfunknetz zugeordnet ist, für eine Partei, die einem zweiten Kommunikationsnetz, insbesondere dem Internet, zugeordnet ist, bereitgestellt, das durch folgende Schritte gekennzeichnet ist.
a) die Partei überträgt einen Request zur Bereitstellung einer Identifikationskennung, der zumindest eine Requestkennung aufweist, an das elektronische Endgerät;
b) über eine Schnittstelle empfängt das elektronische Gerät den Request von der Partei;
c) über eine Kommunikationsverbindung zwischen dem elektronischen Endgerät und eine dem ersten Kommunikationsnetz zugeordnete Servereinrichtung wird ein Schlüssel zum Verschlüsseln einer dem elektronischen Endgerät zugeordneten Identifikationskennung von der Servereinrichtung an das elektronische Endgerät übertragen, oder im elektronischen Endgerät ist ein Schlüssel zum Verschlüsseln einer dem elektronischen Endgerät zugeordneten Identifikationskennung vorgesehen;
d) mittels des Schlüssels wird zumindest die Identifikationskennung im elektronischen Endgerät verschlüsselt;
e) die zumindest verschlüsselte Identifikationskennung wird mit der im elektronisch en Endgerät empfangenen Requestkennung verknüpft, vom elektronischen Endgerät zur Servereinrichtung übertragen und in der Servereinrichtung entschlüsselt;
f) die entschlüsselte Identifikationskennung mit der verknüpften Requestkennung wird über eine Schnittstelle an die Partei übertragen.

Bevorzugt weist das Verfahren wenigstens einen Verfahrenschritt des vorstehend beschriebenen Verfahrens gemäß dem ersten Erfindungsaspekt auf, so dass auf die entsprechenden Ausführungen weiter oben vollinhaltlich Bezug genommen und verwiesen wird.

Wenn die Partei die entschlüsselte Identifikationskennung mit der verknüpften Requestkennung erhält, laufen bevorzugt folgende Verfahrenschritte auf Seiten der Partei ab. Die übertragene Requestkennung wird mit gespeicherten Requestkennungen verglichen. Bei Übereinstimmung von Requestkennungen wird die mit der übertragenen Requestkennung verknüpfte Identifikationskennung einem Request, der mit der gespeicherten Requestkennung verknüpft ist, zugeordnet. Auf diese Weise kann die Partei dem Request die Identifikationskennung des elektronischen Endgeräts, beispielsweise dessen MSISDN, eindeutig zuordnen.

Bevorzugt wird die entschlüsselte Identifikationskennung mit der verknüpften Requestkennung über eine Schnittstelle und eine der Schnittstelle zugeordnete Kommunikationsleitung an die Partei übertragen. Dabei kann es sich beispielsweise um eine separate Anbindung zwischen der Partei und dem Betreiber des ersten Kommunikationsnetzes handeln. Es kann sich beispielsweise um eine drahtgebundene oder drahtlose Leitung handeln, beispielsweise um eine Telefon - und/oder Datenleitung, um eine Internetverbindung, um einen VPN-Tunnel und dergleichen.

Nachfolgend werden einige konkrete Ausführungsbeispiele erläutert, die in Ergänzung zu den vorstehenden Ausführungen das Wesen der vorliegenden Erfindung ebenfalls verdeutlichen.

Beispielsweise kann es sich bei der Partei um einen Anbieter im Internet handeln, der eine Webseite betriebt, wobei die Webseite auf einer Servereinrichtung, einem Rechner oder dergleichen abgelegt ist und über diesen kontaktiert werden kann. Der Nutzer eines elektronischen Endgeräts, beispielsweise eines Smartphones, das einem Mobilfunknetz zugeordnet ist, ruft über sein elektronisches Endgerät über das zweite Kommunikationsnetz, beispielsweise das Internet, die Webseite der Partei auf. Da die Kommunikation nicht über das Mobilfunknetz, sondern über das Internet erfolgt, fehlt in der Kommunikation die Identifikationskennung des elektronischen Endgeräts im ersten Kommunikationsnetz, beispielsweise die MSISDN. Die Partei stellt fest, dass die Identifikationskennung, beispielsweise im Header, fehlt. Die Partei sendet, beispielsweise via Internet-Anbindung einen Request, beispielsweise einen Identitätsrequest, bevorzugt mit einer Requestkennung, etwa einer Session-ID, was der späteren Zuordnung dient, an das elektronische Endgerät, beispielsweise an einen dort laufenden Browser oder eine Applikation. Das elektronische Endgerät fragt bei der Servereinrichtung im ersten Kommunikationsnetz, beispielsweise einem Proxy, den Schlüssel an. Das elektronische Endgerät gibt den Schlüssel und gegebenenfalls die Requestkennung, an eine SIM-Applikation im elektronischen Endgerät weiter. Die SIM-Applikation verschlüsselt mit dem Schlüssel eine Identifikationskennung des elektronischen Endgeräts, beispielsweise die IMSI und gegebenenfalls die Requestkennung. Das elektronische Endgerät schickt, beispielsweise über den Browser und/oder die Applikation die verschlüsselten Daten an die Servereinrichtung. Die Servereinrichtung dekodiert beziehungsweise entschlüsselt die verschlüsselten Daten und wandelt im Falle einer IMSI diese bevorzugt in eine MSISDN um. Alternativ kann die Servereinrichtung der IMSI die entsprechend zugehörige MSISDN zuordnen. Optional kann auch der Request und/oder die Requestkennung in der Servereinrichtung geprüft werden. Optional können die entschlüsselten und aufbereiteten Daten, beispielsweise die Session-ID und die MSISDN zunächst an ein Zielsystem, beispielsweise ein M3p-System, übertragen werden, wo die Daten weiter verarbeitet werden. Abschließend werden die Daten, bevorzugt über eine separate Anbindung, entweder von der Servereinrichtung oder von der Zieleinrichtung an die Partei zur weiteren dortigen Nutzung übertragen.

Gemäß noch einem weiteren Aspekt der Erfindung wird eine Vorrichtung zum Bereitstellen einer Identifikationskennung eines elektronischen Endgeräts, das einem ersten Kommunikationsnetz, insbesondere einem Mobilfunknetz zugeordnet ist, für eine Partei, die einem zweiten Kommunikationsnetz, insbesondere dem Internet, zugeordnet ist, bereitgestellt. Diese Vorrichtung ist gekennzeichnet durch eine Servereinrichtung, aufweisend eine Schnittstelle zur Erzeugung einer Kommunikationsverbindung zwischen der Servereinrichtung und einem elektronischen Endgerät, eine Einrichtung zum Erzeugen eines Schlüssel zum Verschlüsseln einer dem elektronischen Endgerät zugeordneten Identifikationskennung, eine Einrichtung zum Entschlüsseln einer vom elektronischen Endgerät empfangenen verschlüsselten Identifikationskennung, die mit einer Requestkennung der Partei verknüpft ist, wobei die Vorrichtung weiterhin eine Schnittstelle zur Übertragung der entschlüsselten Identifikationskennung mit der verknüpften Requestkennung an die Partei aufweist.

Beispielsweise kann die Schnittstelle zum Übertragen der entschlüsselten Identifikationskennung mit der verknüpften Requestkennung an die Partei in der Servereinrichtung vorgesehen sein. Optional kann die Vorrichtung neben der Servereinrichtung auch noch ein wie weiter oben beschriebenes Zielsystem aufweisen. In einem solchen Fall kann sich die Schnittstelle auch im Zielsystem befinden.

Die erfindungsgemäße Vorrichtung, insbesondere die Servereinrichtung, die als PROXY ausgebildet sein kann und/oder das Zielsystem sind bevorzugt Bestandteile des ersten Kommunikationsnetzes, das beispielsweise ein Mobilfunknetz sein kann. In einem solchen Fall können die genannten Elemente beispielsweise im Kernnetz vorgesehen sein.

Bevorzugt weist die Vorrichtung Mittel zur Durchführung der vorstehend beschriebenen Verfahren auf, so dass auf die entsprechenden Ausführungen vollinhaltlich Bezug genommen und verwiesen wird.

Die Erfindung wird nun anhand eines Ausführungsbeispiels unter Bezugnahme auf die beiliegende Zeichnung näher erläutert. Es zeigt die einzige Figur in schematischer Darstellung eine Netzwerkumgebung, in der die erfindungsgemäßen Verfahren ablaufen können.

In der Figur ist zunächst ein erstes Kommunikationsnetz 10 dargestellt, das im Ausführungsbeispiel als Mobilfunknetz ausgebildet ist. Dem Mobilfunknetz 10 sind elektronische Endgeräte 11 zugeordnet, die im Ausführungsbeispiel als Smartphones ausgebildet sind. In der Figur ist zur Verdeutlichung der Erfindung lediglich ein Smartphone 11 dargerstellt. Das Smartphone 11 verfügt über eine Chipkartenapplikation 12, die im Ausführungsbeispiel als SIM-Applikation ausgebildet ist. Weiterhin ist dem Mobilfunknetz 10 eine Servereinrichtung 13 zugeordnet, die beispielsweise als POROXY ausgebildet sein kann. Die Servereinrichtung 13 weist eine Einrichtung 15 zum Erzeugen eines Schlüssels zum Verschlüsseln einer dem Smartphone 11 zugeordneten Identifikationskennung sowie eine Einrichtung 16 zum Entschlüsseln einer vom Smartphone 11 empfangenen verschlüsselten Identifikationskennung auf.

Zudem verfügt das Mobilfunknetz 10 noch über ein Zielsystem 14, das beispielsweise als HLR, als ein Weiterleitungssystem, als ein Abrechnungssystem oder dergleichen ausgebildet sein kann.

Weiterhin vorgesehen ist ein zweites Kommunikationsnetz 20, das im Ausführungsbeispiel als Internet ausgebildet ist. Dem Internet 20 ist eine Partei 21 zugeordnet. Beispielsweise kann es sich bei der Partei 21 um einen Anbieter im Internet 20 handeln, der eine Webseite betriebt, wobei die Webseite auf einer Servereinrichtung, einem Rechner oder dergleichen abgelegt ist und über diesen kontaktiert werden kann.

Im Stand der Technik ist es bei Smartphones bereits bekannt, dass im Fall, dass zwischen dem Smartphone und einer Partei über ein Mobilfunknetz eine Kommunikation aufgebaut wird, die MSISDN (Mobile Subscriber Integrated Services Digital Network Number) vom Betreiber des Mobilfunknetzes in den Header angereichert wird, so dass die Partei das Smartphone anhand der MSISDN identifizieren kann. Kommuniziert das Smartphone mit der Partei jedoch nicht über das Mobilfunknetz, sondern beispielsweise über das Internet, kann die MSISDN vom Mobilfunknetzbetreiber nicht mehr im Header angereichert werden. Wenn eine solche Anreicherung fehlt, ist es erforderlich, die erforderliche Identifikationskennung des elektronischen Endgeräts der Partei auf andere Weise verfügbar zu machen. An diesem Punkt setzt die vorliegende Erfindung an.

Stellt das Smartphone 11 über das Internat 20 eine Kommunikationsverbindung zu der Partei 21 her, was in der Figur durch den gestrichelten Pfeil 30 verdeutlicht ist, und stellt die Partei 21 fest, dass eine entsprechende Identifikationskennung, beispielsweise die MSISDN, des Smartphones 11 fehlt, schickt die Partei 11 einen Request an das Smartphone 11, mit der Aufforderung, sich zu identifizieren. Die Übertragung des Requests ist in der Figur ebenfalls durch den gestrichelten Pfeil 30 dargestellt. Der Request ist mit einer Requestkennung, beispielsweise einer Session-ID versehen, um eine spätere Zuordnung zu erleichtern.

Um eine solche Identifikationskennung bereitstellen zu können, baut das Smartphone eine Kommunikationsverbindung zu der Servereinrichtung 13 auf, was durch den Pfeil 31 dargestellt ist. Die Kommunikationsverbindung läuft bevorzugt über das Internet 20, kann aber auch über das Mobilfunknetz 10 erfolgen.

Das Smartphone stellt nun eine Anfrage an die Servereinrichtung über Kommunikationsverbindung, dass ein Schlüssel benötigt wird, um die Identifikationskennung des Smartphones 11 zu verschlüsseln. Die Servereinrichtung 13 erstellt über die Einrichtung 15 einen Schlüssel, der beispielsweise ein temporärer oder zufälliger Schlüssel sein kann, mit dem die Identifikationskennung des Smartphones 11 verschlüsselt werden kann. Dieser Schlüssel wird über die Kommunikationsverbindung 31 zurück an das Smartphone 11 geschickt. Die Durchführung des Verfahrens kann im Smartphone 11 beispielsweise mittels eines Browsers und/oder einer Applikation durchgeführt werden. Zusammen mit der Anfrage kann optional auch der Request und(/oder die Requestkennung der Partei 11 mit übertragen werden.

Nach Erhalt des Schlüssels wird nun im Smartphone 11 die Identifikationskennung und gegebenenfalls der Request und/oder die Requestkennung verschlüsselt. Dies findet bevorzugt in der SIM-Applikation 12 statt und ist in der Figur durch Pfeil 32 gekennzeichnet. Auf der SIM befindet sich beispielsweise die IMSI des Smartphones und/oder dessen MSISDN. Beispielsweise kann eine Verschlüsselung der IMSI und/oder der MSISDN vorgenommen werden.

Die verschlüsselten Daten werden anschließend vom Smartphone 11 über die Kommunikationsverbindung 31 an die Servereinrichtung 13 übertragen. Dort werden die Daten mittels der Einrichtung 16 entschlüsselt. Der Servereinrichtung 13 liegt nunmehr die Identifikationskennung des Smartphones 11 vor, gekoppelt mit dem Request beziehungsweise der Requestkennung der Partei 11. Handelt es sich bei der Identifikationskennung um die MSISDN, liegt der Servereinrichtung 13 nunmehr die entschlüsselte MSISDN vor. Handelt es sich bei der Identifikationskennung um die IMSI, liegt der Servereinrichtung 13 die entschlüsselte IMSI vor. In diesem Fall erzeugt oder besorg die Servereinrichtung 13 die zu der IMSI passende MSISDN des Smartphones, indem die IMSI beispielsweise umgewandelt oder in entsprechender Weise übersetzt wird.

Die nunmehr entschlüsselten Daten, bei denen es sich beispielsweise um die MSISDN handelt, die mit der Requestkennung der Partei 11, beispielsweise der Session-ID verknüpft ist, kann optional zunächst an das Zielsystem14 weitergeleitet werden, was in der Figur durch Pfeil 33 dargestellt ist. Anschließend werden die entschlüsselten Daten über eine separate Anbindung, beispielsweise eine separate Kommunikationsleitung 34 an die Partei 21 übertragen.

Wenn die Partei 21 die entschlüsselte Identifikationskennung mit der verknüpften Requestkennung erhält, laufen bevorzugt folgende Verfahrenschritte auf Seiten der Partei 21 ab. Die übertragene Requestkennung, beispielsweise die Session-ID, wird mit gespeicherten Requestkennungen verglichen. Bei Übereinstimmung von Requestkennungen wird die mit der übertragenen Requestkennung verknüpfte Identifikationskennung, beispielsweise die MSISDN, einem Request, der mit der gespeicherten Requestkennung verknüpft ist, zugeordnet. Auf diese Weise kann die Partei 21 dem Request die Identifikationskennung des Smartphones 11, beispielsweise dessen MSISDN, eindeutig zuordnen.

### Bezugszeichenliste

- 10: Erstes Kommunikationsnetzwerk (Mobilfunknetzwerk)
- 11: Elektronisches Endgerät (Smartphone)
- 12: Chipkartenapplikation (SIM-Applikation)
- 13: Servereinrichtung (PROXY)
- 14: Zielsystem
- 15: Einrichtung zum Erzeugen eines Schlüssel zum Verschlüsseln einer dem elektronischen Endgerät zugeordneten Identifikationskennung
- 16: Einrichtung zum Entschlüsseln einer vom Smartphone empfangenen verschlüsselten Identifikationskennung auf.

- 20: Zweites Kommunikationsnetzwerk (Internet)
- 21: Partei

- 30: Kommunikationsverbindung Smartphone - Partei
- 31: Kommunikationsverbindung Smartphone - Servereinrichtung
- 32: Verschlüsselungsschritt
- 33: Kommunikationsverbindung Server - Zielsystem
- 34: Kommunikationsleitung

## Patentansprüche

1. Verfahren zum Bereitstellen einer Identifikationskennung eines elektronischen Endgeräts (11), das einem ersten Kommunikationsnetz (10), insbesondere einem Mobilfunknetz zugeordnet ist, für eine Partei (21), die einem zweiten Kommunikationsnetz (20), insbesondere dem Internet, zugeordnet ist, **gekennzeichnet durch** folgende Schritte:
a) über eine Schnittstelle empfängt das elektronische Gerät (11), das dem ersten Kommunikationsnetz (10) zugeordnet ist, von der Partei (21), die dem zweiten Kommunikationsnetz (20) zugeordnet ist, einen Request zur Bereitstellung einer Identifikationskennung, der zumindest eine Requestkennung aufweist;
b) über eine Kommunikationsverbindung (31) zwischen dem elektronischen Endgerät (11), das dem ersten Kommunikationsnetz (10) zugeordnet ist, und eine dem ersten Kommunikationsnetz (10) zugeordnete Servereinrichtung (13) wird ein Schlüssel zum Verschlüsseln einer dem elektronischen Endgerät (11) zugeordneten Identifikationskennung von der Servereinrichtung (13) an das elektronische Endgerät (11) übertragen, oder im elektronischen Endgerät (11) ist ein Schlüssel zum Verschlüsseln einer dem elektronischen Endgerät (11) zugeordneten Identifikationskennung vorgesehen;
c) mittels des Schlüssels wird zumindest die Identifikationskennung im elektronischen Endgerät (11) verschlüsselt;
d) die zumindest verschlüsselte Identifikationskennung wird mit der im elektronischen Endgerät (11) empfangenen Requestkennung verknüpft, vom elektronischen Endgerät (11) zur Servereinrichtung (13) übertragen und in der Servereinrichtung (13) entschlüsselt;
e) die entschlüsselte Identifikationskennung mit der verknüpften Requestkennung wird über eine Schnittstelle zur Übertragung an die Partei (21), die dem zweiten Kommunikationsnetz (20) zugeordnet ist, bereitgestellt.

2. Verfahren nach Anspruch 1, **dadurch gekennzeichnet, dass** die entschlüsselte Identifikationskennung mit der verknüpften Requestkennung über eine der Servereinrichtung (13) zugeordnete Schnittstelle zur Übertragung an die Partei (21) bereitgestellt wird.

3. Verfahren nach Anspruch 1 oder 2, **dadurch gekennzeichnet, dass** die entschlüsselte Identifikationskennung mit der verknüpften Requestkennung von der Servereinrichtung (13) an ein Zielsystem (14) übertragen wird, welches dem ersten Kommunikationsnetz (10) zugeordnet ist und dass die entschlüsselte Identifikationskennung mit der verknüpften Requestkennung über eine dem Zielsystem (14) zugeordnete Schnittstelle zur Übertragung an die Partei (21) bereitgestellt wird.

4. Verfahren nach einem der Ansprüche 1 bis 3, **dadurch gekennzeichnet, dass** das elektronische Endgerät (11) mittels eines Browsers oder einer Applikation, die auf dem elektronischen Endgerät (11) abläuft und/oder in diesem implementiert ist eine Kommunikationsverbindung (31) zwischen dem elektronischen Endgerät (11) und der Servereinrichtung (13) aufbaut.

5. Verfahren nach einem der Ansprüche 1 bis 4, **dadurch gekennzeichnet, dass** die Kommunikationsverbindung (31) zwischen dem elektronischen Endgerät (11) und der Servereinrichtung (13) über das erste Kommunikationsnetz (10) und/oder über das zweite Kommunikationsnetz (20) aufgebaut wird.

6. Verfahren nach einem der Ansprüche 1 bis 5, **dadurch gekennzeichnet, dass** in dem Fall, dass über die Kommunikationsverbindung (31) zwischen dem elektronischen Endgerät (11) und der Servereinrichtung (13) ein Schlüssel zum Verschlüsseln einer dem elektronischen Endgerät (11) zugeordneten Identifikationskennung von der Servereinrichtung (13) an das elektronische Endgerät (11) übertragen wird, das elektronische Endgerät (11) eine Kommunikationsverbindung (31) zur Servereinrichtung (13) aufbaut, dass das elektronische Endgerät (11) über die Kommunikationsverbindung (31) eine Anfrage zur Übertragung eines Schlüssel an die Servereinrichtung (13) überträgt, dass in der Servereinrichtung (13) ein Schlüssel erzeugt oder bereitgestellt wird und dass der Schlüssel von der Servereinrichtung (13) über die Kommunikationsverbindung (31) an das elektronische Endgerät (11) übertragen wird.

7. Verfahren nach einem der Ansprüche 1 bis 6, **dadurch gekennzeichnet, dass** die Verschlüsselung zumindest der Identifikationskennung in einer Chipkartenapplikation (12) im elektronischen Endgerät (11), insbesondere in einer SIM-Applikation, erfolgt.

8. Verfahren nach einem der Ansprüche 1 bis 7, **dadurch gekennzeichnet, dass** als Identifikationskennung eine dem elektronischen Endgerät (11) zugeordnete IMSI (International Mobile Subscriber Identity) und/oder eine dem elektronischen Endgerät (11) zugeordnete MSISDN (Mobile Subscriber Integrated Services Digital Network Number) verschlüsselt wird.

9. Verfahren nach Anspruch 8, **dadurch gekennzeichnet, dass** in dem Fall, dass als Identifikationskennung eine dem elektronischen Endgerät (11) zugeordnete IMSI verschlüsselt wird, die verschlüsselte IMSI über die Kommunikationsverbindung (31) vom elektronischen Endgerät (11) an die Servereinrichtung (13) übertragen wird, dass zumindest die IMSI in der Servereinrichtung (13) entschlüsselt wird und dass mittels der Servereinrichtung (13) der entschlüsselten IMSI eine dem elektronischen Endgerät (11) zugeordnete MSISDN als Identifikationskennung zugeordnet wird.

10. Verfahren zum Bereitstellen einer Identifikationskennung eines elektronischen Endgeräts (11), das einem ersten Kommunikationsnetz (10), insbesondere einem Mobilfunknetz zugeordnet ist, für eine Partei (21), die einem zweiten Kommunikationsnetz (20), insbesondere dem Internet, zugeordnet ist, **gekennzeichnet durch** folgende Schritte:
a) die Partei (21), die dem zweiten Kommunikationsnetz (20) zugeordnet ist, überträgt einen Request zur Bereitstellung einer Identifikationskennung, der zumindest eine Requestkennung aufweist, an das elektronische Endgerät (11), das dem ersten Kommunikationsnetz (10) zugeordnet ist;
b) über eine Schnittstelle empfängt das elektronische Gerät (11), das dem ersten Kommunikationsnetz (10) zugeordnet ist, den Request von der Partei (21), die dem zweiten Kommunikationsnetz (20) zugeordnet ist;
c) über eine Kommunikationsverbindung (31) zwischen dem elektronischen Endgerät (11), das dem ersten Kommunikationsnetz (10) zugeordnet ist, und eine dem ersten Kommunikationsnetz (10) zugeordnete Servereinrichtung (13) wird ein Schlüssel zum Verschlüsseln einer dem elektronischen Endgerät (11) zugeordneten Identifikationskennung von der Servereinrichtung (13) an das elektronische Endgerät (11) übertragen, oder im elektronischen Endgerät (11) ist ein Schlüssel zum Verschlüsseln einer dem elektronischen Endgerät (11) zugeordneten Identifikationskennung vorgesehen;
d) mittels des Schlüssels wird zumindest die Identifikationskennung im elektronischen Endgerät (11) verschlüsselt;
e) die zumindest verschlüsselte Identifikationskennung wird mit der im elektronisch en Endgerät (11) empfangenen Requestkennung verknüpft, vom elektronischen Endgerät (11) zur Servereinrichtung (13) übertragen und in der Servereinrichtung (13) entschlüsselt;
f) die entschlüsselte Identifikationskennung mit der verknüpften Requestkennung wird über eine Schnittstelle an die Partei (21), die dem zweiten Kommunikationsnetz (20) zugeordnet ist übertragen.

11. Verfahren nach Anspruch 10, **dadurch gekennzeichnet, dass** dieses wenigstens einen Verfahrensschritt gemäß einem der Ansprüche 2 bis 9 aufweist.

12. Verfahren nach Anspruch 10 oder 11, **dadurch gekennzeichnet, dass** auf Seiten der Partei (21) die übertragene Requestkennung mit gespeicherten Requestkennungen verglichen wird, und dass bei Übereinstimmung von Requestkennungen die mit der übertragenen Requestkennung verknüpfte Identifikationskennung einem Request, der mit der gespeicherten Requestkennung verknüpft ist, zugeordnet wird.

13. Verfahren nach einem der Ansprüche 10 bis 12, **dadurch gekennzeichnet, dass** die entschlüsselte Identifikationskennung mit der verknüpften Requestkennung über eine Schnittstelle und eine der Schnittstelle zugeordnete Kommunikationsleitung (34) an die Partei (21) übertragen wird.

14. Vorrichtung zum Bereitstellen einer Identifikationskennung eines elektronischen Endgeräts (11), das einem ersten Kommunikationsnetz (10), insbesondere einem Mobilfunknetz zugeordnet ist, für eine Partei (21), die einem zweiten Kommunikationsnetz (20), insbesondere dem Internet, zugeordnet ist,
**gekennzeichnet durch** eine Servereinrichtung (13) die dem ersten Kommunikationsnetz (10) zugeordnet ist, aufweisend eine Schnittstelle zur Erzeugung einer Kommunikationsverbindung (31) zwischen der Servereinrichtung (13) und einem elektronischen Endgerät (11), das dem ersten Kommunikationsnetz (10) zugeordnet ist, eine Einrichtung (15) zum Erzeugen eines Schlüssel zum Verschlüsseln einer dem elektronischen Endgerät (11) zugeordneten Identifikationskennung, eine Einrichtung (16) zum Entschlüsseln einer vom elektronischen Endgerät (11) empfangenen verschlüsselten Identifikationskennung, die mit einer Requestkennung der Partei (21), die dem zweiten Kommunikationsnetz (20) zugeordnet ist, verknüpft ist, wobei die Vorrichtung weiterhin eine Schnittstelle zur Übertragung der entschlüsselten Identifikationskennung mit der verknüpften Requestkennung an die Partei (21), die dem zweiten Kommunikationsnetz (20) zugeordnet ist, aufweist.

15. Vorrichtung nach Anspruch 14, **dadurch gekennzeichnet, dass** diese Mittel zur Durchführung der Verfahren nach einem der Ansprüche 1 bis 13 aufweist.

## Claims

1. A method of providing an identification identifier of an electronic terminal (11), which is assigned to a first communication network (10), in particular a mobile radio network, for a party (21), which is assigned to a second communication network (20), in particular to the internet, **characterized by** the following steps:
a) via an interface, the electronic terminal (11), which is assigned to the first communication network (10), receives from the party (21), which is assigned to the second communication network (20), a request for providing an identification identifier, which comprises at least one request identifier;
b) via a communication link (31) between the electronic terminal (11), which is assigned to the first communication network (10) and a server device (13) being assigned to the first communication network (10), a key for encoding an identification identifier being assigned to the electronic terminal (11) is transmitted from the server device (13) to the electronic terminal (11), or a key for encrypting an identification identifier being assigned to the electronic terminal (11) is provided in the electronic terminal (11);
c) by means of said key, at least the identification identifier in the electronic terminal (11) is encrypted;
d) the at least encrypted identification identifier is linked with the request identifier received in the electronic terminal (11), is transmitted from the electronic terminal (11) to the sever device (13) and is decrypted in the server device (13);
e) the decrypted identification identifier with the linked request identifier is provided via an interface for transmission to the party (21), which is assigned to the second communication network (20).

2. The method according to claim 1, **characterized in that** the decrypted identification identifier with the linked request identifier is provided via an interface for transmission to the party (21), which is assigned to the server device (13).

3. The method according to claim 1 or 2, **characterized in that** the decrypted identification identifier with the linked request identifier is transmitted from the server device (13) to a target system (14) which is assigned to the first communication network (10) and that the decrypted identification identifier with the linked request identifier is provided via an interface for transmission to the party (21), which is assigned to the target system (14).

4. The method according to anyone of claims 1 to 3, **characterized in that** the electronic terminal (11) establishes a communication link (31) between the electronic terminal (11) and the server device (13) by means of a browser or an application, which runs on the electronic terminal (11) and/or which is implemented therein.

5. The method according to anyone of claims 1 to 4, **characterized in that** the communication link (31) between the electronic terminal (11) and the server device (13) is established via the first communication network (10) and/or via the second communication network (20).

6. The method according to anyone of claims 1 to 5, **characterized in that** in case that via the communication link (31) between the electronic terminal (11) and the server device (13) a key for encrypting an identification identifier being assigned to the electronic terminal (11) is transmitted from the server device (13) to the electronic terminal (11); the electronic terminal (11) establishes a communication link (31) to the server device (13), that the electronic device (11) transmits a request for transmission of a key to the server device (13) via the communication link (31), that in the server device (13) a key is generated or provided and that the key is transmitted from the server device (13) via the communication link (31) to the electronic terminal (11).

7. The method according to anyone of claims 1 to 6, **characterized in that** the encryption of at least the identification identifier is performed in a chip card application (12) in the electronic terminal (11), in particular in a SIM-application.

8. The method according to anyone of claims 1 to 7, **characterized in that** as identification identifier an IMSI (International Mobile Subscriber Identity) assigned to the electronic terminal (11) and/or an MSISDN (Mobile Subscriber Integrated Services Digital Network Number) assigned to the electronic terminal (11) is encrypted.

9. The method according to claim 8, **characterized in that** in case that as identification identifier an IMSI assigned to the electronic terminal (11) is encrypted, the encrypted IMSIU is transmitted from the electronic terminal (11) to the server device (13) via the communication link (31), that at least the IMSI is decrypted in the server device (13) and that by means of the server device (13) an MSISDN assigned to the electronic terminal (11) is assigned as identification identifier to the decrypted IMSI.

10. A method of providing an identification identifier of an electronic terminal (11), which is assigned to a first communication network (10), in particular a mobile radio network, for a party (21), which is assigned to a second communication network (20), in particular to the internet, **characterized by** the following steps:
a) the party (21), which is assigned to the second communication network (20), transmits a request for the provision of an identification identifier, which comprises at least one request identifier, to the electronic terminal (11), which is assigned to the first communication network (10);
b) via an interface, the electronic terminal (11), which is assigned to the first communication network (10), receives the request from the party (21), which is assigned to the second communication network (20);
c) via a communication link (31) between the electronic terminal (11), which is assigned to the first communication network (10) and a server device (13) being assigned to the first communication network (10), a key for encoding an identification identifier being assigned to the electronic terminal (11) is transmitted from the server device (13) to the electronic terminal (11), or a key for encrypting an identification identifier being assigned to the electronic terminal (11) is provided in the electronic terminal (11);
d) by means of said key, at least the identification identifier in the electronic terminal (11) is encrypted;
e) the at least encrypted identification identifier is linked with the request identifier received in the electronic terminal (11), is transmitted from the electronic terminal (11) to the sever device (13) and is decrypted in the server device (13);
f) the decrypted identification identifier with the linked request identifier is transmitted via an interface to the party (21), which is assigned to the second communication network (20).

11. The method according to claim 10, **characterized in that** it comprises at least one method step according to anyone of claims 2 to 9.

12. The method according to claim 10 or 11, **characterized in that** at the side of party (21), the transmitted request identifier is compared with stored request identifiers, and that upon a match of request identifiers, the identification identifier being linked to the transmitted request identifier is assigned to a request which is linked to the stored request identifier.

13. The method according to anyone of claims 10 to 12, **characterized in that** the decrypted identification identifier with the linked request identifier is transmitted to a party (21) via an interface and a communication link (21) assigned to the interface.

14. A device of providing an identification identifier of an electronic terminal (11), which is assigned to a first communication network (10), in particular a mobile radio network, for a party (21), which is assigned to a second communication network (20), in particular to the internet, **characterized by** a server device (13), which is assigned to the first communication network (10), comprising an interface for generating a communication link (31) between the server device (13) and an electronic terminal (11),which is assigned to the first communication network (10), a device (15) for generating a key for encrypting an identification identifier assigned to the electronic terminal (11), a device (16) for decrypting an encrypted identification identifier received by the electronic terminal (11), which is linked to a request identifier of party (21), which is assigned to the second communication network (20), whereby the device further comprises an interface for transmitting the decrypted identification identifier with the linked request identifier to the party (21) which is assigned to the second communication network (20).

15. The device according to claim 14, **characterized in that** it comprises means for performing the methods according to anyone of claims 1 to 13.

## Revendications

1. Procédé servant à fournir un code d'identification d'un terminal (11) électronique, qui est associé à un premier réseau de communication (10), en particulier à un réseau de téléphonie mobile, pour une partie (21), qui est associée à un deuxième réseau de communication (20), en particulier à l'Internet, **caractérisé par** des étapes qui suivent :
a) l'appareil (11) électronique, qui est associé au premier réseau de communication (10), reçoit par l'intermédiaire d'une interface, de la partie (21), qui est associée au deuxième réseau de communication (20), une requête servant à fournir un code d'identification, laquelle présente au moins un code de requête ;
b) une clé servant à crypter un code d'identification associé au terminal (11) électronique est transmise, par l'intermédiaire d'une liaison de communication (31) entre le terminal (11) électronique, qui est associé au premier réseau de communication (10) et un système de serveur (13) associé au premier réseau de communication (10), par le système de serveur (13) au terminal (11) électronique, ou une clé servant à crypter un code d'identification associé au terminal (11) électronique est prévue dans le terminal (11) électronique ;
c) au moins le code d'identification est crypté au moyen de la clé dans le terminal (11) électronique ;
d) le code d'identification au moins crypté est combiné au code de requête reçu dans le terminal (11) électronique, est transmis par le terminal (11) électronique au système de serveur (13) et est décrypté dans le système de serveur (13) ;
e) le code d'identification décrypté avec le code de requête combiné est fourni par l'intermédiaire d'une interface servant à la transmission à la partie (21), qui est associée au deuxième réseau de communication (20) .

2. Procédé selon la revendication 1, **caractérisé en ce que** le code d'identification décrypté est fourni avec le code de requête combiné par l'intermédiaire d'une interface associée au système de serveur (13), servant à la transmission à la partie (21).

3. Procédé selon la revendication 1 ou 2, **caractérisé en ce que** le code d'identification décrypté est transmis avec le code de requête combiné par le système de serveur (13) à un système cible (14), lequel est associé au premier réseau de communication (10), et que le code d'identification décrypté est fourni avec le code de requête combiné par l'intermédiaire d'une interface associée au système cible (14), servant à la transmission à la partie (21).

4. Procédé selon l'une quelconque des revendications 1 à 3, **caractérisé en ce que** le terminal (11) électronique établit au moyen d'un navigateur ou d'une application, qui est exécutée sur le terminal (11) électronique et/ou est implémentée dans ce dernier, une liaison de communication (31) entre le terminal (11) électronique et le système de serveur (13).

5. Procédé selon l'une quelconque des revendications 1 à 4, **caractérisé en ce que** la liaison de communication (31) est établie entre le terminal (11) électronique et le système de serveur (13) par l'intermédiaire du premier réseau de communication (10) et/ou par l'intermédiaire du deuxième réseau de communication (20).

6. Procédé selon l'une quelconque des revendications 1 à 5, **caractérisé en ce que** dans le cas où une clé servant à crypter un code d'identification associé au terminal (11) électronique est transmise par l'intermédiaire de la liaison de communication (31) entre le terminal (11) électronique et le système de serveur (13) par le système de serveur (13) au terminal (11) électronique, le terminal (11) électronique établit une liaison de communication (31) avec le système de serveur (13), que le terminal (11) électronique transmet, par l'intermédiaire de la liaison de communication (31), une demande servant à la transmission d'une clé au système de serveur (13), qu'une clé est générée ou fournie dans le système de serveur (13), et que la clé est transmise par le système de serveur (13) par l'intermédiaire de la liaison de communication (31) au terminal (11) électronique.

7. Procédé selon l'une quelconque des revendications 1 à 6, **caractérisé en ce que** l'encryptage au moins du code d'identification est effectué dans une application de carte à puce (12) dans le terminal (11) électronique, en particulier dans une application SIM.

8. Procédé selon l'une quelconque des revendications 1 à 7, **caractérisé en ce que** sont cryptés, en tant que codes d'identification, un IMSI (International Mobile Subscriber Identity) associé au terminal (11) électronique et/ou un MSISDN (Mobile Subscriber Integrated Services Digital Network Number) associé au terminal (11) électronique.

9. Procédé selon la revendication 8, **caractérisé en ce que** dans le cas où un IMSI associé au terminal (11) électronique est crypté en tant que code d'identification, l'IMSI crypté est transmis par l'intermédiaire de la liaison de communication (31) par le terminal (11) électronique au système de serveur (13), qu'au moins l'IMSI est décrypté dans le système de serveur (13), et qu'un MSISDN associé au terminal (11) électronique est associé en tant que code d'identification à l'IMSI décrypté au moyen du système de serveur (13).

10. Procédé servant à fournir un code d'identification d'un terminal (11) électronique, qui est associé à un premier réseau de communication (10), en particulier à un réseau de téléphonie mobile, pour une partie (21), qui est associée à un deuxième réseau de communication (20), en particulier à l'Internet, **caractérisé par** des étapes qui suivent :
a) la partie (21), qui est associée au deuxième réseau de communication (20), transmet une requête servant à fournir un code d'identification, qui présente au moins un code de requête, au terminal (11) électronique, qui est associé au premier réseau de communication (10) ;
b) l'appareil (11) électronique, qui est associé au premier réseau de communication (10), reçoit de la partie (21), qui est associée au deuxième réseau de communication (20), la requête par l'intermédiaire d'une interface ;
c) une clé servant à crypter un code d'identification associé au terminal (11) électronique est transmise par le système de serveur (13) au terminal (11) électronique par l'intermédiaire d'une liaison de communication (31) entre le terminal (11) électronique, qui est associé au premier réseau de communication (10), et un système de serveur (13) associé au premier réseau de communication (10), ou une clé servant à crypter un code d'identification associé au terminal (11) électronique est prévue dans le terminal (11) électronique ;
d) au moins le code d'identification est crypté dans le terminal (11) électronique au moyen de la clé ;
e) le code d'identification au moins crypté est combiné au code de requête reçu dans le terminal (11) électronique, est transmis par le terminal (11) électronique au système de serveur (13), et est décrypté dans le système de serveur (13) ;
f) le code d'identification décrypté avec le code de requête combiné est transmis par l'intermédiaire d'une interface à la partie (21), qui est associée au deuxième réseau de communication (20).

11. Procédé selon la revendication 10, **caractérisé en ce que** ce dernier présente au moins une étape de procédé selon l'une quelconque des revendications 2 à 9.

12. Procédé selon la revendication 10 ou 11, **caractérisé en ce que** du côté de la partie (21), le code de requête transmis est comparé à des codes de requête mémorisés, et qu'en cas de concordance des codes de requête, le code d'identification combiné au code de requête transmis est associé à une requête, qui est combinée au code de requête mémorisé.

13. Procédé selon l'une quelconque des revendications 10 à 12, **caractérisé en ce que** le code d'identification décrypté est transmis à la partie (21) avec le code de requête combiné par l'intermédiaire d'une interface et d'une ligne de communication (34) associée à l'interface.

14. Dispositif servant à fournir un code d'identification d'un terminal (11) électronique, qui est associé au premier réseau de communication (10), en particulier à un réseau de téléphonie mobile, pour une partie (21), qui est associée à un deuxième réseau de communication (20), en particulier à l'Internet,
**caractérisé par** un système de serveur (13), qui est associé au premier réseau de communication (10), présentant une interface servant à générer une liaison de communication (31) entre le système de serveur (13) et un terminal (11) électronique, qui est associé au premier réseau de communication (10), un système (15) servant à générer une clé servant à crypter un code d'identification associé au terminal (11) électronique, un système (16) servant à décrypter un code d'identification crypté reçu par le terminal (11) électronique, lequel est combiné à un code de requête de la partie (21), qui est associée au deuxième réseau de communication (20), dans lequel le dispositif présente du reste une interface servant à la transmission du code d'identification décrypté avec le code de requête combiné à la partie (21), qui est associée au deuxième réseau de communication (20).

15. Dispositif selon la revendication 14, **caractérisé en ce que** ledit dispositif présente des moyens servant à mettre en oeuvre le procédé selon l'une quelconque des revendications 1 à 13.
